# EUROPEAN PATENT APPLICATION

(11) **EP 3 872 460 A1**
(43) Date of publication of application: **01.09.2021**
(21) Application number: 20173600.6
(22) Date of filing: 08.05.2020
(51) Int. Cl.: G01G 11/04

(54) **FUEL FEEDING SYSTEM AND METHOD FOR CONTROLLING A FUEL FEEDING SYSTEM AS WELL AS USE**

(30) Priority: 28.02.2020 IN 202021008650
(71) Applicant: thyssenkrupp Industries India Pvt. Ltd., Mumbai 400021 (IN); thyssenkrupp AG, 45143 Essen (DE)
(72) Inventor: Roy, Indranil, 411057 Pune (IN); Srinivas, Tadigadapa Venkata Satya Subramanya, 411018 Pune (IN); Kandhaswamy, Chandra Sekar, 411034 Pimpri-Chinchwad (IN); Ahmad, Shakeel, 411033 Pune (IN); Navale, Rajkumar, 411045 Pune (IN)
(74) Representative: thyssenkrupp Intellectual Property GmbH

(57) **Abstract**

The present invention relates to a fuel feeding system for providing fuel in an arrangement between a fuel bunker and a steam generator, wherein the fuel feeding system exhibits a belt conveyor device comprising a belt for accommodating the fuel and for feeding the fuel from an outlet of the fuel bunker to a furnace of the steam generator, wherein the belt conveyor device exhibits a plurality of idlers or pulleys respectively supporting the belt, wherein the fuel feeding system exhibits a control unit and a speed sensor coupled to the belt and to the control unit, wherein the fuel feeding system further exhibits a weight sensor coupled to the belt and coupled to the control unit and configured for acquiring throughput data relating to at least one mass parameter. The present invention further relates to a method for controlling a fuel feeding system (100) based on mass-related throughput data.

## Description

### TECHNICAL FIELD

The present invention relates to fuel feeding systems, especially coal feeding systems, in an arrangement between a fuel bunker and a steam generator. Further, the present invention also relates to methods for controlling a fuel feeding system, as well as to the use of weight sensors for monitoring fuel/coal throughput, especially during a predefined time frame, along a path of motion between a fuel bunker and a steam generator. In particular, the present invention relates to features of the independent claims.

### BACKGROUND

It has been found that in steam generator plants according to prior art, it is quite difficult to understand or control accurate fuel flow resp. fuel consumption, especially in case the fuel is fed to a boiler by means of volumetric feeders. Until now, determining fuel consumption could not be realized in straightforward manner in a simple and efficient arrangement. In particular, there is the wish or the need to get more information about the quantity of fuel/coal being consumed by the steam generator, especially by boiler equipment during heating processes when heating water or likewise fluids.

In particular, in fuel feeding processes for handling coal material, accurate monitoring of the quantity of handled coal material would be favorable. For example, steam generators are fed with fuel in the form of crushed coal. The particle size distribution of crushed coal may reside within the range 0 to 10 mm, especially 0 to 8 mm, with 20-30 % being smaller than 1 mm. The density may reside within the range 800 to 1,200 kg/m³ (for example).

### SUMMARY

It is an object of the present invention to provide for devices and methods which allow for improved process monitoring and process control in fuel feeding processes.

The above mentioned object is solved by a system according to independent device claim(s).

In particular, the above mentioned object is solved by a fuel feeding system configured for providing fuel, especially coal, in an arrangement between a fuel bunker and a steam generator, especially boiler, wherein the fuel feeding system exhibits at least one belt conveyor device comprising at least one belt for accommodating the fuel and for feeding the fuel, especially coal, from an outlet of the fuel bunker to a furnace of the steam generator, wherein the belt conveyor device exhibits a plurality of idlers and/or pulleys respectively supporting the belt, wherein the fuel feeding system exhibits a control unit and at least one speed sensor coupled to the belt (resp. coupled to at least one idler or pulley) and to the control unit, wherein the fuel feeding system further exhibits at least one weight sensor coupled to the belt (resp. coupled to at least one idler or pulley), the respective weight sensor preferably being integrated in at least one of the idlers and/or pulleys, and the respective weight sensor being coupled to the control unit and configured for acquiring throughput data relating to at least one mass parameter. Thereby, fuel feeding to the steam generator resp. to a boiler can be monitored accurately. Optionally, accurate feeding of fuel can be facilitated by controlling the feeding rate. Not least, these features also allow for monitoring the throughput in an exact and reliable manner. In particular, it has been found that mass parameters are more favorable for determining throughput than volumetric parameters, especially with regard to process control based on monitored balance of energy (tons of fuel consumed per megawatt of generated power).

The fuel feeding system may exhibit a data storage unit and can be configured for monitoring the fuel throughput in a time-dependent and/or position-dependent manner, based on the acquired massic throughput data (mass-related throughput data) stored in the data storage unit, especially during at least one year, especially as a function of time and belt speed, especially also as a function of energy output of the steam generator (which energy output data may be provided to the fuel feeding system by external sensors). This also favors mass balance and power balance.

The present invention allows for accurately monitoring the fuel throughput, i.e., the fuel consumption (especially in tons of fuel per hour, [t/h]). The present invention also allows for accurately determining the actual/current plant heat rate (especially in tons of fuel consumed per megawatt of generated power, [t/MW]).

The fuel bunker's volume may (e.g.) reside within the range of 2 x 200 m³ to 2 x 300 m³, especially ca. 2 x 265 m³.

The longitudinal extension of the fuel feeding system, especially of the belt of the belt conveyor device between inlet and outlet, may (e.g.) reside within the range 6,000 to 10,000 mm, especially ca. 8,500 mm.

The belt width may (e.g.) reside within the range 700 to 900 mm, especially ca. 800 mm. The drive power for the belt feeder (one or several belt drive units) may (e.g.) reside within the range 4 to 7 kW, especially ca. 5.5 kW. The capacity of a clean out chain conveyor may (e.g.) reside within the range 0.5 to 1.5 TPH, especially ca. 1 TPH. The drive power for that belt feeder may (e.g.) reside within the range 2 to 3 kW, especially ca. 2.2 kW.

According to the invention, the fuel feeding system may comprise components being arranged between the fuel bunker and the steam generator. Also, the fuel feeding system may at least further comprise the fuel bunker. Also, the fuel feeding system may also further comprise the steam generator.

The sensor data acquired by the weight sensor(s) may also be processed in conjunction with sensor data of further sensors, especially sensor data of sensors coupled to the fuel bunker and/or to the steam generator.

The speed sensor can also be designated driving sensor or conveying sensor. The speed sensor is coupled to the belt or to at least one drive or idler or pulley of the belt, in order to acquire data relating to the belt's conveying speed. In this context, the wording "coupled to the belt" may also comprise a connection of the speed sensor with any component driving or supporting the belt.

The wording "feeding the fuel" may also comprise a conveying motion.

According to one embodiment the fuel feeding system exhibits both carrying idlers and weighing idlers, wherein a plurality of weight sensors are integrated in at least some of the weighing idlers or coupled to a respective axis of the idlers, especially in an arrangement with uniform distribution along the belt. This may also ensure favorable integration of further functionality in existing systems, without the need for intensive design reviews. In particular, the weight sensors can be coupled or integrated to/in some of the idler's axis.

According to one embodiment the fuel feeding system exhibits at least one weight sensor being arranged in a weigh scale arrangement, wherein the weigh scale arrangement comprises at least one of the idlers, wherein at least one of the weight sensors is coupled to said idler, especially with two weight sensors each being coupled to one side of the idler's axis. This also provides direct feedback and allows for consistent data acquisition. In particular, a weigh scale arrangement facilitates accurate acquisition of mass-related sensor data also at high conveying speed.

According to one embodiment the fuel feeding system exhibits a weigh scale arrangement comprising at least two weighing points at different longitudinal positions along the belt, wherein massic throughput data is acquired in each weighing point. This advantageously allows for plausibility checks and may improve accuracy, especially when data is acquired in at least three longitudinal positions, and arithmetic average of mass-related throughput data is determined. The longitudinal distance of the weighing points is e.g. in the range of 1 to 3 meters.

According to one embodiment the fuel feeding system exhibits at least one weigh scale arrangement comprising at least two pairs of weighing idler and weight sensor, with each pair (weighing idler and weight sensor) being arranged at different longitudinal monitoring positions of the belt, wherein in each pair, the weight sensor is coupled to an axis or integrated in a bearing of the respective idler. That standardized configuration also facilitates comparison of measurements and analysis of deviating data. Also, upgrading (retrofitting) of existing systems can be facilitated.

According to one embodiment the fuel feeding system exhibits at least one component of the following group: belt scrapper; tail pulley; drive pulley; clean out conveyor; material height adjustment plate; screw take-up arrangement. These components may further improve the feeding and monitoring process, especially with increased accuracy.

According to one embodiment, along the longitudinal extension of the belt between the bunker outlet and the steam generator, there are at least three, four or five longitudinal monitoring positions each exhibiting at least one weighing idler and/or at least one weight sensor, wherein each longitudinal monitoring position is coupled to the control unit (by wire or wireless). The fuel feeding system may exhibit a weigh scale arrangement comprising at least three, four or five longitudinal weighing positions. This may also improve accuracy and may allow for validation of acquired data and plausibility check.

According to one embodiment the control unit is coupled to at least one drive unit of the fuel feeding system, especially to a drive unit coupled to the belt or to a drive pulley or actuating the belt, wherein the fuel feeding system is configured for controlling the belt speed based on acquired massic throughput data. Such an arrangement may also allow for process control in real time, especially based on data acquired further downstream, especially data acquired in/by the steam generator.

According to one embodiment the fuel feeding system exhibits at least one clean out conveyor, especially a clean out chain conveyor, wherein the clean out conveyor (especially at least one drive thereof) is coupled to the control unit, wherein the control unit is configured to control the driving of the clean out conveyor, especially as a function of operating conditions of the belt conveyor device. The clean out conveyor allows for cleaning out spillage, e.g. in case the operation of the belt conveyor device generates spillage. In particular, spillage can be fed back. The clean out conveyor can be operated in tandem with the belt drive(s) of the belt conveyor device.

The above mentioned object is also solved by a method according to the independent method claim(s), in particular, by a method for controlling a fuel feeding system, especially a fuel feeding system as described above, wherein mass transport (throughput) of fuel, especially coal, carried out by at least one belt conveyor device of the fuel feeding system is monitored by the fuel feeding system in an arrangement between an outlet of a fuel bunker and a furnace of a steam generator, wherein mass-related throughput monitoring is carried out based on data acquisition in at least one longitudinal monitoring position of a belt of the belt conveyor device, wherein throughput data relating to at least one mass parameter is acquired in the (respective) longitudinal monitoring position by means of at least one weight sensor arranged in said longitudinal monitoring position(s), and wherein acquired massic throughput data is transmitted to a control unit, and wherein throughput data is processed as a function of belt speed (resp. conveyor speed data). Thereby, fuel mass transport (throughput) can be monitored in a time-dependent and/or position-dependent manner, especially during at least one year, especially as a function of feeding time, especially also as a function of energy output of a/the steam generator fed by the fuel feeding system, the energy output data especially being provided by external sensors. This configuration especially provides also for above mentioned advantages.

According to one embodiment mass-related throughput is monitored at a plurality of longitudinal monitoring positions along the belt, especially at a plurality of idlers or pulleys respectively supporting the belt. This also allows for robustness and plausibility checks. Belt speed can also be monitored based on rotation speed measurements at the idlers or pulleys, or based on the rotation speed of a pulley's drive.

According to one embodiment weight data is acquired at a plurality of longitudinal positions of idlers or pulleys, especially by means of weight sensors integrated in a respective idler or pulley. This may also provide for good accuracy.

According to one embodiment throughput data is determined based on mass-related data acquired by the weight sensors, the mass-related data being integrated over time. Throughput data can be correlated with energy demand or energy absorption or energy output of the steam generator, especially with respect to a predefined period of time. This also allows for balance of energy (tons of fuel consumed per megawatt of generated power), especially for steam generation processes further downstream.

According to one embodiment throughput data is acquired and processed in real time, especially continuously. This also allows for implementation of servo loops for improving the control of the feeding process.

According to one embodiment at least one drive unit of the fuel feeding system, especially a drive unit coupled to the belt or to a drive pulley or actuating the belt, is controlled by the control unit for adjusting the belt speed based on acquired massic throughput data. Thereby, the process may also be controlled with respect to mass and energy consumption.

The above mentioned object is also solved by a use according to the independent use claim(s), in particular, by use of at least one weight sensor and/or idler or pulley, especially use of a plurality of weight sensors and/or a plurality of idlers or pulleys, for monitoring mass transport (throughput) of fuel, especially coal, the mass transport being carried out by at least one belt conveyor device of a fuel feeding system in an arrangement between an outlet of a fuel bunker and a furnace of a steam generator, wherein throughput data relating to at least one mass parameter is acquired by the at least one weight sensor and/or idler or pulley and is transmitted to a control unit configured for processing said massic throughput data, especially as a function of belt speed (resp. conveyor speed data or rotational speed data) such that fuel mass transport (throughput) is monitored in a time-dependent and/or position-dependent manner, especially as a function of energy output of a/the steam generator being fed by the fuel feeding system, especially use of a plurality of weight sensors at a plurality of idlers or integrated in said idlers at a plurality of longitudinal monitoring positions of a belt in a fuel feeding system according to any of the preceding device claims for controlling the feeding of fuel by the fuel feeding system, especially in a method according to any of the preceding method claims. Thereby, especially in the field of belt conveyors feeding coal from a bunker to a steam generator, above mentioned advantages can be ensured, and mass balance and power balance can be improved.

To sum up, the present invention teaches about implementation of mass-related throughput monitoring in context with fuel feeding processes by means of weight sensors and/or idlers or pulleys in a belt conveyor device, especially also with regard to mass and energy consumption (resp. mass-related energy consumption), especially also with regard to control of the feeding processes.

### SHORT DESCRIPTION OF FIGURES

In the following figures, the invention is described in more detail. In the figures:
- **Figure 1**: in a side view a fuel feeding system according to one embodiment;
- **Figure 2**: in a side view according to section **B-B** a bunker section of a fuel feeding system according to one embodiment;
- **Figure 3**: in a top view according to section **E-E** a belt conveyor device of a fuel feeding system according to one embodiment;
- **Figure 4**: in a side view according to section **A-A** an upstream section of a fuel feeding system according to one embodiment;
- **Figure 5**: in a side view according to section **C-C** an intermediate section of a fuel feeding system according to one embodiment;
- **Figure 6**: in a side view according to section **D-D** a downstream section of a fuel feeding system according to one embodiment;
- **Figure 7**: in a schematic illustration process steps or components according to embodiments.

### DETAILED DESCRIPTION OF FIGURES

For reference signs not explicitly mentioned in some of the figures, it is referred to the further figures. To begin with, the present invention is described by generally referring to all reference signs. Specific aspects are described in context with individual figures.

A fuel feeding system 100 exhibits a belt conveyor device 30 arranged between a bunker 22 and a steam generator 26. Fuel, especially coal, is provided to the fuel bunker 22. The fuel passes a rod gate 1 (e.g. 2,000 mm x 700 mm) and a (manual) slide gate 2 (e.g. 2,000 mm x 700 mm) and an expansion joint 3 and a bunker outlet 4, especially a transition chute. The fuel (coal) then is provided to at least one belt 12 (especially endless conveyor belt for accommodating coals) of the belt conveyor device 30. The belt conveyor device 30 especially comprises carrying idlers 8, weighing idlers 9, and at least one return idler 10, and further comprises a drive unit 15 and a drive pulley 16 as well as a tail pulley 17. The belt conveyor device 30 is supported on a base frame 14, which may also accommodate a clean out conveyor 13.

The belt conveyor device 30 further exhibits at least one weigh scale arrangement 5 and at least one weight sensor 25 and a speed sensor 27. The sensors and the weighing equipment are coupled to a control unit 40 for storing acquired mass-related data in a data storage unit 41. The control unit 40 is coupled at least to the drives of the belt conveyor device 30, i.e., at least to the drive unit 15 resp. drive pulley 16 and also to the clean out conveyor 13.

Fuel, especially coal, is conveyed from belt conveyor inlet 31 (especially opening coupled to discharge chute of bunker) to a discharge chute 19, in order to provide the fuel to a steam generator 26 (especially to a boiler).

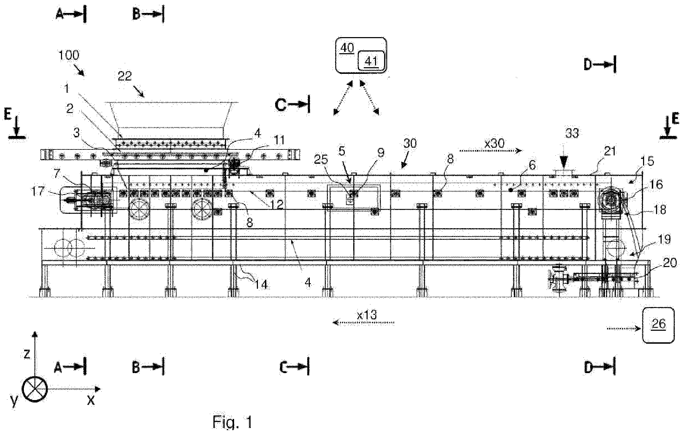

The belt 12 extends in longitudinal direction x, wherein y designates the transverse direction, and z designates the height direction. Longitudinal monitoring positions are designated by x1, ..., xn. According to the invention, mass-related data acquisition can be carried out at one or several of these positions. These positions may correspond to the idler's longitudinal positions. Also, in each respective positions, one or several sensors can be arranged at or integrated in the respective idlers. The conveying direction x30 of the belt conveyor 30 corresponds to the longitudinal direction x. As shown in Fig. 1, in that specific embodiment, the clean out direction x13 is opposite to the conveying direction x30.

The fuel feeding system 100 may further exhibit the following components, which each may further improve the functioning of the system: skirt board 6; screw take-up arrangement 7; material height adjusting plate 11; clean out chain conveyor 13; belt scrapper 18; motorized slide gate 20; casing 21, especially comprising removable panels; inlet 33, especially for lime stone(s).

Fig. 1 shows a plurality of features of the fuel feeding system 100, especially the belt conveyor device 30. The fuel feeding system 100 comprises at least one weight sensor 25 which is implemented in conjunction with weighing idler 9 in a weigh scale arrangement 5. In Fig. 1, communication of the control unit 40 with the sensors 5, 25, 27 and drive unit 15 is illustrated. In this embodiment, the weighing position(s) at least approximately correspond to a longitudinal position at half the longitudinal extension of the feeding belt section. It has been found that a longitudinal distance to the discharge area below the bunker is quite advantageous regarding accuracy of mass-related data acquisition.

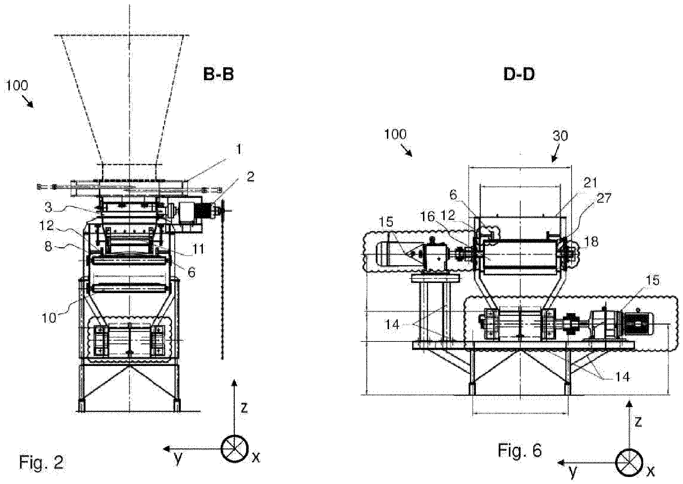

In Fig. 2, some details relating to the fuel feeding process from bunker 22 to conveyor 30 are illustrated, in particular, the position of the respective drive unit 15 or drive pulley 16.

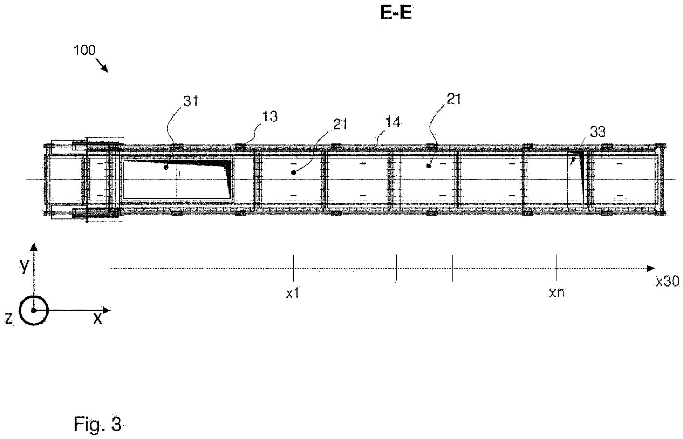

Fig. 3 illustrates the longitudinal position of fuel inlet 31 and lime stone inlet 33. The belt is covered by removable panels 21. Reference sign x1 at least approximately designates the longitudinal monitoring position of weight sensor 25 shown in Fig. 1, and reference sign xn designates any further optional longitudinal monitoring position. The longitudinal position of the (first) longitudinal monitoring position x1 can be chosen individually for each specific application.

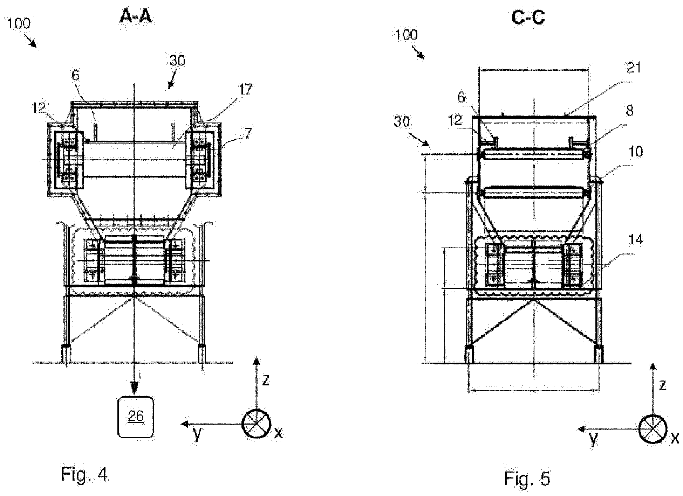

In Fig. 4, tail pulley 17 and screw take-up arrangement 7 as well as skirt board 6 are illustrated. An arrow indicates the path of motion of the fuel being transported to steam generator 26.

Fig. 5 shows the arrangement of idlers 8, 10 at one specific longitudinal position, especially at an intermediate position upstream of the longitudinal monitoring position of weight sensor 25 shown in Fig. 1.

Fig. 6 illustrates the conveyor's downstream end, wherein drive units 15 for the belt 12 and the clean out conveyor 13 are shown also.

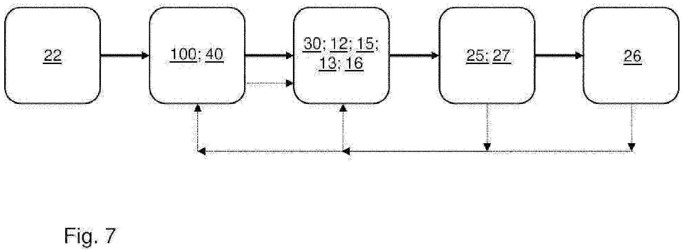

Fig. 7 exemplifies the process of conveying the fuel/coal and the process of monitoring mass transportation based on mass-related sensor data, wherein broken line arrows indicate an optional servo loop for controlling the drives and/or further components of the system. The broken line arrow starting from steam generator 26 indicates optional data input from downstream processes, especially data input relating to data of a heating/boiling process. An extended/enhanced analysis based on such data of any process further downstream also facilitates e.g. power balance determination. Continuous line arrows illustrate fuel/mass/coal flow (conveying direction).

In Fig. 2, 5, 6, some arrows in x-, y- and z-direction indicate specific dimensions of exemplary embodiments. At least these dimensions can be adjusted or designed by the skilled person according to each individual application. By referring to the rod gate 1 and the slide gate 2 (Fig. 1, 2), overall dimensions of the embodiments shown in the figures can be estimated at least roughly.

### List of reference signs

- 1: rod gate (e.g. 2,000 mm x 700 mm)
- 2: (manual) slide gate (e.g. 2,000 mm x 700 mm)
- 3: expansion joint
- 4: bunker outlet, especially transition chute
- 5: weigh scale arrangement
- 6: skirt board
- 7: screw take-up arrangement
- 8: carrying idler
- 9: weighing idler
- 10: return idler
- 11: material height adjusting plate
- 12: belt, especially endless conveyor belt for accommodating coals
- 13: clean out conveyor, especially chain conveyor
- 14: base frame
- 15: drive unit
- 16: drive pulley
- 17: tail pulley
- 18: belt scrapper
- 19: discharge chute
- 20: motorized slide gate
- 21: casing, especially comprising removable panels
- 22: fuel bunker
- 25: weight sensor
- 26: steam generator, especially boiler
- 27: speed sensor
- 100: fuel feeding system
- 30: belt conveyor device
- 31: belt conveyor inlet, especially opening coupled to discharge chute of bunker
- 33: inlet, especially for lime stone(s)
- 40: control unit
- 41: data storage unit
- x: longitudinal direction
- x1, ..., xn: longitudinal monitoring position(s)
- x13: clean out direction
- x30: conveying direction of the belt conveyor
- y: transverse direction
- z: height direction

## Claims

1. Fuel feeding system (100) configured for providing fuel, especially coal, in an arrangement between a fuel bunker (22) and a steam generator (26), wherein the fuel feeding system (100) exhibits at least one belt conveyor device (30) comprising at least one belt (12) for accommodating the fuel and for feeding the fuel, especially coal, from an outlet (4) of the fuel bunker (22) to a furnace of the steam generator (26),
wherein the belt conveyor device (30) exhibits a plurality of idlers or pulleys (8, 9, 10) respectively supporting the belt (12),
wherein the fuel feeding system (100) exhibits a control unit (40) and at least one speed sensor (27) coupled to the belt (12) and to the control unit (40),
wherein the fuel feeding system (100) further exhibits at least one weight sensor (25) coupled to the belt (12) and coupled to the control unit (40) and configured for acquiring throughput data relating to at least one mass parameter.

2. Fuel feeding system (100) according to claim 1, wherein the fuel feeding system (100) exhibits a data storage unit (41) and is configured for monitoring the fuel throughput in a time-dependent and/or position-dependent manner, based on the acquired massic throughput data stored in the data storage unit (41), especially as a function of time and belt speed and/or as a function of energy output of the steam generator (26).

3. Fuel feeding system (100) according to claim 1 or 2, wherein the fuel feeding system (100) exhibits both carrying idlers (8) and weighing idlers (9), wherein a plurality of weight sensors (25) are integrated in at least some of the weighing idlers (9) or coupled to a respective axis of the idlers, especially in an arrangement with uniform distribution along the belt (12).

4. Fuel feeding system according (100) to any of the preceding claims, wherein the fuel feeding system (100) exhibits at least one weight sensor (25) being arranged in a weigh scale arrangement (5), wherein the weigh scale arrangement (5) comprises at least one of the idlers (9), wherein at least one weight sensor (25) is coupled to said idler (9), especially with two weight sensors each being coupled to one side of the idler's axis; and/or wherein the fuel feeding system (100) exhibits a weigh scale arrangement (25) comprising at least two weighing points (x1, ..., xn) at different longitudinal positions along the belt (12), wherein massic throughput data is acquired in each weighing point.

5. Fuel feeding system (100) according to any of the preceding claims, wherein the fuel feeding system (100) exhibits at least one weigh scale arrangement (5) comprising at least two pairs of weighing idler (9) and weight sensor (25), with each pair being arranged at different longitudinal monitoring positions (x1, ..., xn) of the belt (12), wherein in each pair, the weight sensor (25) is coupled to an axis or integrated in a bearing of the respective idler (9).

6. Fuel feeding system (100) according to any of the preceding claims, wherein the fuel feeding system (100) exhibits at least one of: belt scrapper (18); tail pulley (17); drive pulley (16); clean out conveyor (13); material height adjustment plate (11); screw take-up arrangement (7).

7. Fuel feeding system (100) according to any of the preceding claims, wherein along the longitudinal extension of the belt (12) between the bunker outlet (4) and the steam generator (26), there are at least three, four or five longitudinal monitoring positions (x1, ..., xn) each exhibiting at least one weighing idler (9) and/or at least one weight sensor (25), wherein each longitudinal monitoring position is coupled to the control unit (40); and/or wherein the fuel feeding system (100) exhibits a weigh scale arrangement (5) comprising at least three, four or five longitudinal weighing positions.

8. Fuel feeding system (100) according to any of the preceding claims, wherein the control unit (40) is coupled to at least one drive unit (15) of the fuel feeding system (100), especially to a drive unit coupled to the belt (12) or to a drive pulley (16) or actuating the belt, wherein the fuel feeding system (100) is configured for controlling the belt speed based on acquired massic throughput data.

9. Fuel feeding system (100) according to any of the preceding claims, wherein the fuel feeding system (100) exhibits at least one clean out conveyor (13), wherein the clean out conveyor is coupled to the control unit, wherein the control unit (40) is configured to control the driving of the clean out conveyor, especially as a function of operating conditions of the belt conveyor device (30).

10. Method for controlling a fuel feeding system (100), especially a fuel feeding system (100) according to any of the preceding claims, wherein mass transport of fuel, especially coal, carried out by at least one belt conveyor device (30) of the fuel feeding system (100) is monitored by the fuel feeding system in an arrangement between an outlet (4) of a fuel bunker (22) and a furnace of a steam generator (26), wherein mass-related throughput monitoring is carried out based on data acquisition in at least one longitudinal monitoring position of a belt (12) of the belt conveyor device (30), especially in the longitudinal position of at least one idler (8, 9) or pulley (16, 17) respectively supporting the belt (12), wherein throughput data relating to at least one mass parameter is acquired in the at least one longitudinal monitoring position by means of at least one weight sensor (25) arranged in said longitudinal monitoring position(s), and wherein acquired massic throughput data is transmitted to a control unit (40), and wherein throughput data is processed as a function of belt speed.

11. Method according to the preceding method claim, wherein mass-related throughput is monitored at a plurality of longitudinal monitoring positions along the belt (12), especially at a plurality of idlers (8, 9) or pulleys respectively supporting the belt (12).

12. Method according to any of the preceding method claims, wherein weight data is acquired at a plurality of longitudinal positions of idlers or pulleys, especially by means of weight sensors integrated in a respective idler or pulley.

13. Method according to any of the preceding method claims, wherein throughput data is determined based on mass-related data acquired by the weight sensors, the mass-related data being integrated over time; and/or wherein throughput data is correlated with energy demand or energy absorption or energy output of the steam generator, especially with respect to a predefined period of time.

14. Method according to any of the preceding method claims, wherein throughput data is acquired and processed in real time, especially continuously.

15. Method according to any of the preceding method claims, wherein at least one drive unit of the fuel feeding system, especially a drive unit coupled to the belt or to a drive pulley or actuating the belt, is controlled by the control unit for adjusting the belt speed based on acquired massic throughput data.

16. Use of at least one weight sensor (25) and/or idler or pulley, especially use of a plurality of weight sensors (25) and/or a plurality of idlers or pulleys (8, 9, 10), for monitoring mass transport of fuel, especially coal, the mass transport being carried out by at least one belt conveyor device (30) of a fuel feeding system (100) in an arrangement between an outlet of a fuel bunker (22) and a furnace of a steam generator (26), wherein massic throughput data relating to at least one mass parameter is acquired by the at least one weight sensor (25) and/or idler or pulley (8, 9, 10) and is transmitted to a control unit (40) configured for processing said massic throughput data, especially as a function of belt conveying speed, especially in a fuel feeding system (100) according to any of the preceding device claims for controlling the feeding of fuel by the fuel feeding system, especially in a method according to any of the preceding method claims.
